# EUROPÄISCHE PATENTSCHRIFT

(11) **EP 1 616 466 B1**
(45) Veröffentlichungstag und Bekanntmachung des Hinweises auf die Patenterteilung: **16.01.2013**
(21) Anmeldenummer: 05013549.0
(22) Anmeldetag: 23.06.2005
(51) Int. Cl.: A01B 21/08, A01B 73/04

(54) **Scheibengerät**
Disk implement
Outil à disques

(30) Priorität: 01.07.2004 DE 102004031818
(43) Veröffentlichungstag der Anmeldung: 18.01.2006
(73) Patentinhaber: Amazonen-Werke H. Dreyer GmbH & Co. KG, 49205 Hasbergen (DE)
(72) Erfinder: Sosnicki, Jürgen, 04205 Leipzig (DE)

(56) Entgegenhaltungen:
- EP-A- 0 645 075
- WO-A-2004/004438
- DE-C1- 4 210 725
- DE-U1- 9 018 157
- GB-A- 2 163 933

## Beschreibung

Die Erfindung betrifft ein Scheibengerät gemäß d23. Oberbegriffes des Patentanspruches 1.

Ein derartiges Scheibengerät siehe auch WO 2004/004438 ist beispielsweise durch den Prospekt "Amazone Catros mit Druckvermerk MI 203/D 691 (D) 02.03" bekannt. Derartige Scheibengeräte mit großen Arbeitsbreiten bis etwa 6 m lassen sich durch Verschwenken der Teilsektionen um in Fahrtrichtung verlaufende Achsen ohne Schwierigkeiten in bekannter und einfacher Weise von Arbeitsin Transportstellung einklappen. Bei diesen Geräten ist es möglich, die Trennstelle der zueinander verschiebbaren Träger, die im mittleren Bereich aneinander anschließen und an einklappbaren Tragrahmen angeordnet sind, so zu wählen, dass nach dem Einklappen in aufrechter Transportposition noch eine ausreichende Bodenfreiheit bei zulässiger Transporthöhe erreicht wird. Somit können ohne weiteres unsymmetrisch lange Träger akzeptiert werden, da die zulässige Transporthöhe von 4 m keinesfalls überschritten wird.

Probleme gibt es jedoch bei Bodenbearbeitungsgeräten, die eine Arbeitsbreite von etwa 7,50 m aufweisen. Hierbei müssen dann die Träger so geteilt werden, dass sie eine gleiche Länge aufweisen, um bei einer ausreichenden Bodenfreiheit von etwa 20 bis 25 cm die zulässige Transporthöhe von 4 m nicht zu überschreiten. Aufgrund der insbesondere bei Scheibengeräten erforderlichen versetzten Anordnung der Träger in Arbeitsposition, wobei der eine Träger den anderen Träger jeweils seitlich erheblich überragt, ist es bisher bei Bodenbearbeitungsgeräten nicht möglich, die einklappbaren Teilsektionen um in Fahrtrichtung verlaufende Achsen in einfacher Weise einzuklappen, um einerseits eine ausreichende Bodenfreiheit zu gewährleisten und andererseits die zulässige Transporthöhe von 4 m nicht zu überschreiten.

Der Erfindung liegt die Aufgabe zugrunde, mit einfachen Maßnahmen hier Abhilfe zu schaffen.

Diese Aufgabe wird erfindungsgemäß durch die kennzeichnende Maßnahme des Anspruches 1 gelöst. Infolge dieser Maßnahme werden während oder nach dem Einklappvorgang die verschiebbaren Träger gegenüber dem Zentralrahmen bzw. dem einklappbaren Seitenrahmen so verschoben, dass bei ausreichender Bodenfreiheit die zulässige Gesamthöhe von 4 m nicht überschritten wird. Dieses Zugelement kann als aktives oder passives Element ausgebildet sein.

In vorteilhafter Weise wird ein passives Zugelement in Form eines Seiles zwischen dem Träger und dem zu verschiebenden Träger angeordnet, so dass beim Einklappen automatisch der zu verschiebende Träger entsprechend verschoben wird.

Es ist auch möglich, zwischen dem zu verschiebenden Träger und dem Zentralrahmen oder Tragrahmen ein Stellelement, wie beispielsweise Hydraulikzylinder etc. anzuordnen.

Weitere Einzelheiten der Erfindung sind der Beispielsbeschreibung und den Zeichnungen zu entnehmen. Hierbei zeigen
- Fig. 1: die Bodenbearbeitungsmaschine in der Arbeitsposition in der Ansicht von vorne in perspektivischer Darstellung,

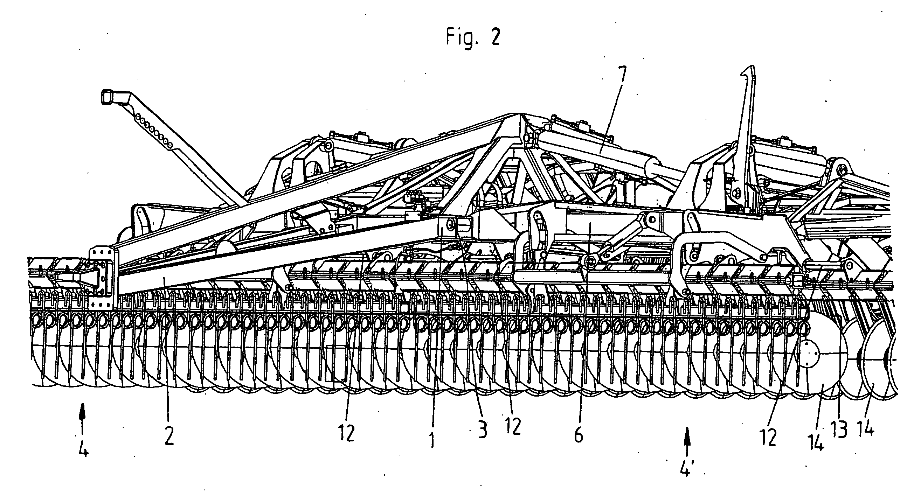

- Fig. 2: die Maschine gemäß Fig. 1 in Teilansicht, vergrößertem Maßstab, in perspektivischer Ansicht schräg von vorne,

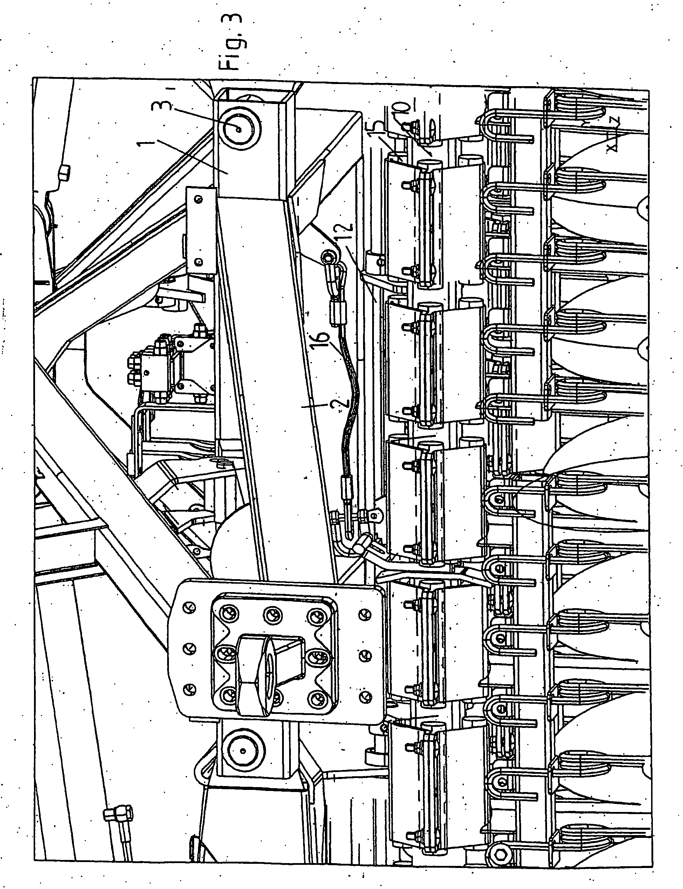

- Fig. 3: die Maschine gemäß Fig. 1 in vergrößerter Darstellung und in Teilansicht, in perspektivischer Ansicht von schräg vorne,
- Fig. 4: die Maschine in Transportposition in perspektivischer Ansicht schräg von vorne,

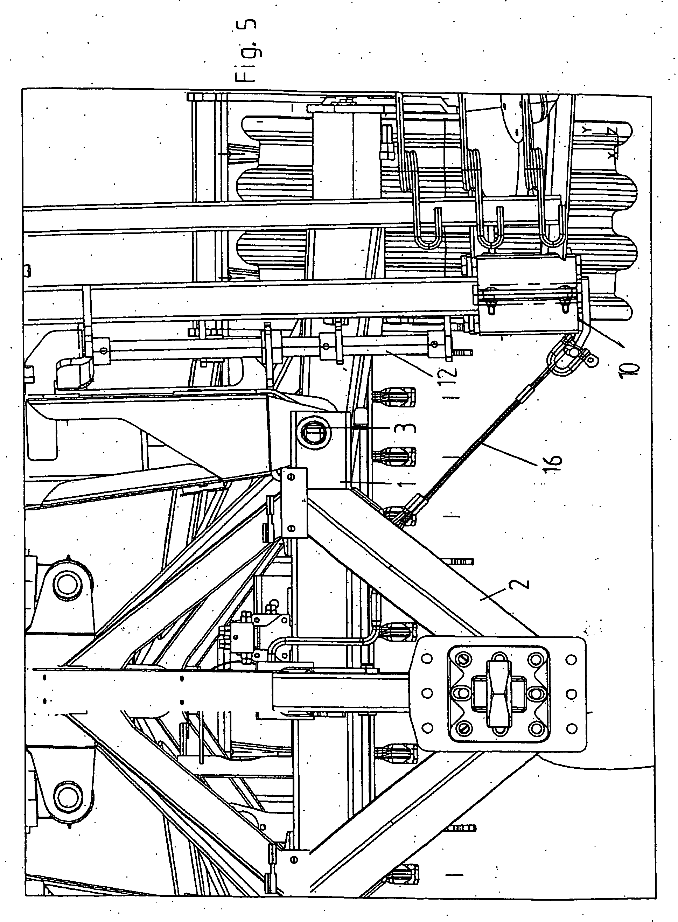

- Fig. 5: die Maschine gemäß Fig. 4 in Teilansicht und vergrößertem Maßstab in der Ansicht von vorne und
- Fig. 6: die Maschine in perspektivischer Darstellung gemäß Fig. 4, jedoch ohne zwangsweises Verschieben der Teilsektionen.

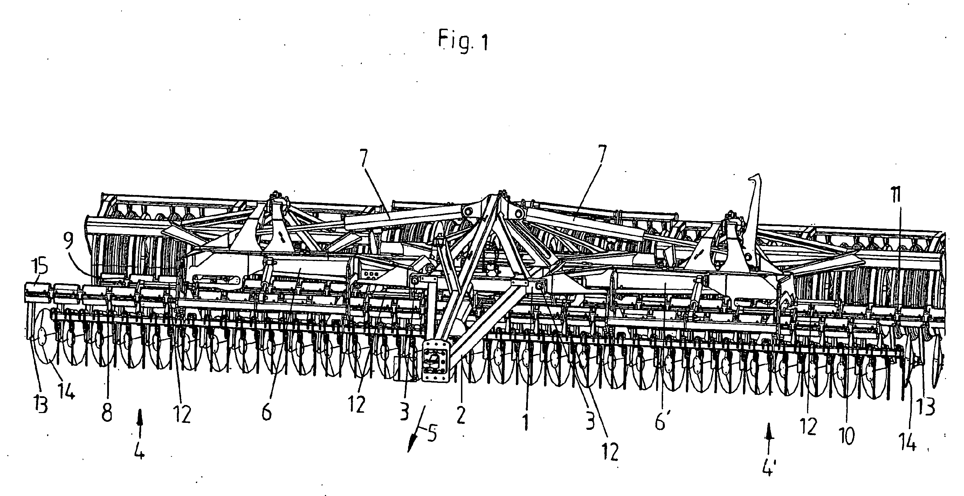

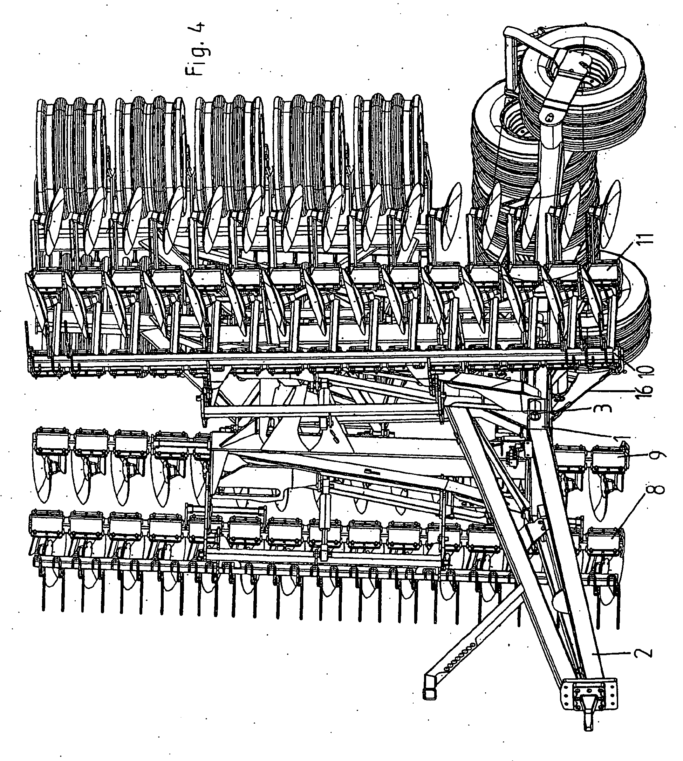

Das als Scheibenegge ausgebildete Bodenbearbeitungsgerät weist den Zentralrahmen 1 mit der Zugdeichsel 2 auf. An dem Zentralrahmen 1 sind mittels Gelenke 3 die beiden Seitensektionen 4 und 4' um in Fahrtrichtung 5 verlaufende Achse schwenkbar angeordnet. Die Seitensektionen 4 und 4' weisen Tragrahmen auf. Zwischen den Tragrahmen 6, 6' der Seitensektionen und dem Zentralrahmen 1 sind die Hydraulikzylinder 7 zum Verschwenken der Seitensektionen aus Arbeitsposition gemäß in Fig. 1 in die in Fig. 4 dargestellte Transportposition angeordnet. Die Hydraulikzylinder 7 sind mittels nicht dargestellter Hydraulikleitungen mit einer Hydraulikanlage, beispielweise eines Ackerschleppers verbunden. An den Tragrahmen 6, 6' der Seitensektion 4, 4' sind zwei hintereinander und zumindest annähernd parallel zueinander angeordnete quer zur Bewegungsrichtung des Bodenbearbeitungsgerätes 5 verlaufende und zueinander verschiebbare Träger 8, 9, 10, 11 mittels einer als Schiebeführung ausgebildeten Halterungsvorrichtung 12 angeordnet. Jeder Träger 8, 9, 10, 11 ist mit einer Vielzahl von Armen 13 versehen, die jeweils mit wenigstens einer schräg angestellten und frei drehbaren Scheibe 14 versehen sind. Jeder Arm 13 ist mittels eines elastischen Gelenkes 15 an dem zugeordneten Träger 8, 9, 10, 11 beweglich aufgehängt. Die Scheiben 14 an dem ersten und zweiten Träger 8, 9, 10, 11 sind so angeordnet, dass die Scheiben 14 an dem ersten Träger 8, 9 entgegengesetzt schräg zu den an dem zweiten Träger 10, 11 angeordneten Scheiben 14 angeordnet ist. Es ist wenigstens ein Element 15 für den ersten oder zweiten Träger 8, 9,10, 11 vorgesehen, dass zur Befestigung der im wesentlichen parallelen Träger in wenigstens eine vorher bestimmte Arbeitsposition zueinander oder zum Rahmen 1, 6, 6' des Bodenbearbeitungsgerätes ausgebildet ist. Im Ausführungsbeispiel ist dieses Element als Anschlagelement ausgebildet.

Aufgrund der besonderen Ausbildung des Bodenbearbeitungsgerätes als Scheibengerät sind die vorderen und hinteren Träger 8, 9, 10, 11 sehr stark zueinander versetzt, so dass die Enden des vorderen und hinteren Trägers 8, 9, 10, 11 wie in Fig. 1 zu erkennen, an ihren Enden 16 in großem Abstand zu einer parallel durch die Enden 16 verlaufenden und parallel zur Fahrtrichtung 5 verlaufenden Ebene enden.

Hierdurch ergibt sich bei einem als Scheibenegge ausgebildeten Bodenbearbeitungsgerät, welches eine Arbeitsbreite von etwa 7,50 m aufweist und die beiden jeweils in einer Querreihe aneinander anschließenden Trägern eine Gesamtlänge von jeweils 7,50 m aufweisen, dass jeder Träger 8, 9, 10, 11 jeder Seitensektion 4, 4' weisen etwa eine Länge von 3,75 m aufweist.

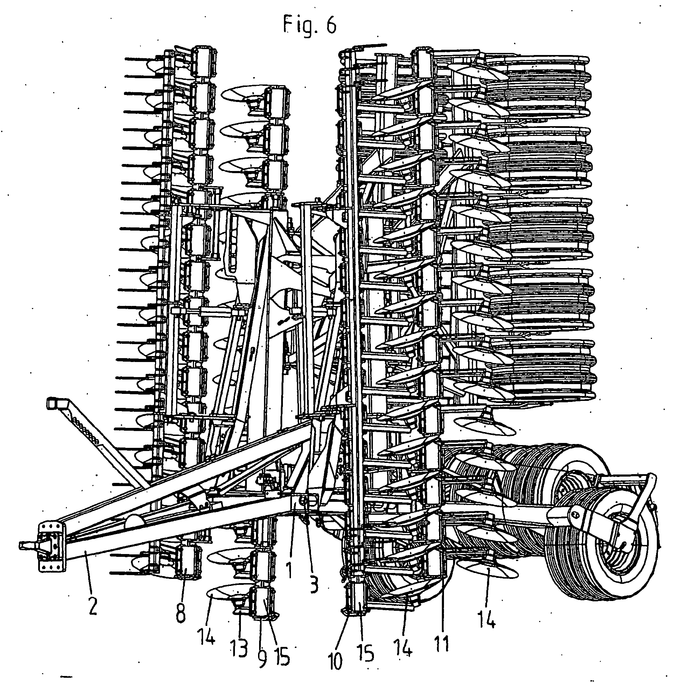

Wenn in die Seitensektionen 4 , 4' ohne die jeweils in die Mitte überstehenden Träger der Seitensektionen 4, 4' nicht verschoben werden, so stehen sie quasi mit ihrem inneren Ende auf dem Boden auf. Eine ausreichende Bodenfreiheit ist nicht gegeben, während sie auf der Oberseite weit unter die zulässige Transporthöhe von 4 m zurückstehen, wie Fig. 6 zeigt. Um diese Träger entsprechend zu verschieben und gleichzeitig im vollen Umfange die zulässige Transporthöhe von 4 m ausnutzen zu können, sind zwischen dem Zentralrahmen 1 und den zu verschiebenden Trägern 9, 10 jeweils ein in Aufwärtsrichtung jeweiligen Träger 9, 10 verschiebbares Zugelement 16 angeordnet, welches als Seil ausgebildet ist. Mittels dieses Seiles 16 werden durch die Einklappbewegung aufgrund der geometrischen Verhältnisse die an sich in Position gemäß Fig. 6 verbleibenden Träger 9, 10 in die in Fig. 4 dargestellte Position mittels des Seiles 16 nach oben geschoben, so dass eine ausreichende Bodenfreiheit von beispielsweise 25 cm bei einer zulässigen Gesamttransporthöhe von 4 m für die verschobenen Träger 9, 10 sich ergibt.

## Patentansprüche

1. Als Scheibengerät ausgebildetes Bodenbearbeitungsgerät, das zur Bodenkultivierung geeignet ist, wobei das Scheibengerät zwei an einem Zentralrahmen (1) um in Fahrtrichtung weisende Schwenkachsen gelenkig angeordnete und unmittelbar aneinander anschließende und Tragrahmen aufweisende Seitensektionen (4, 4') aufweist, wobei an dem Tragrahmen jeder Seitensektion zwei hintereinander und zumindest annähernd parallel zueinander angeordnete und quer zur Bewegungsrichtung des Bodenbearbeitungsgerätes laufenden und zueinander verschiebbare Träger (9, 10) aufweist, wobei jeder Träger (9, 10) mit einer Vielzahl von Armen versehen ist, die mit wenigstens einer schräg angestellten und frei drehbaren Scheibe versehen sind, wobei jeder Arm elastisch an dem zugeordneten Träger (9, 10) aufgehängt ist, wobei entsprechende Scheiben an dem ersten und zweiten Träger (9, 10) so angeordnet sind, dass die Scheiben an dem ersten Träger (9, 10) entgegengesetzt schräg zu den an dem zweiten Träger (9, 10) angeordneten Scheiben angeordnet sind, wobei wenigstens ein Element für den ersten und/oder zweiten Träger (9, 10) vorgesehen ist, das zur Festlegung der im wesentlichen parallelen Träger (9, 10) in wenigstens eine vorher bestimmte Arbeitsposition zueinander und/oder zum Rahmen des Bodenbearbeitungsgerätes ausgebildet ist, **dadurch gekennzeichnet, dass** zwischen dem Zentralrahmen (1) und zumindest einem der verschiebbaren Träger (9,10) der Seitensektionen (4,4')ein beim Einklappen der Seitensektionen (4, 4') den Träger (9, 10) in Aufwärtsrichtung verschiebenden Zugelement (16) angeordnet ist.

2. Scheibengerät nach Anspruch 1, **dadurch gekennzeichnet, dass** das Zugelement (16) als Seil ausgebildet ist.

## Claims

1. Soil cultivation device, in the form of a discer, which is suitable for soil cultivation, wherein the discer has two side sections (4, 4') which are arranged on a central frame (1) in a manner articulated about pivot axes that are directed in the direction of travel, immediately follow one another and have support frames, wherein each side section has, on the support frame, two carriers (9, 10) that are arranged in succession and at least approximately parallel to one another, extend transversely to the direction of movement of the soil cultivation device and are displaceable in relation to one another, wherein each carrier (9, 10) is provided with a multiplicity of arms which are provided with at least one obliquely positioned and freely rotatable disc, wherein each arm is suspended elastically on the associated carrier (9, 10), wherein corresponding discs are arranged on the first and second carriers (9, 10) such that the discs are arranged on the first carrier (9, 10) in a manner inclined in the opposite direction to the discs arranged on the second carrier (9, 10), wherein at least one element for the first and/or second carrier (9, 10) is provided, said element being designed to set the substantially parallel carriers (9, 10) in at least one previously determined working position with respect to one another and/or with respect to the frame of the soil cultivation device, **characterized in that** between the central frame (1) and at least one of the displaceable carriers (9, 10) of the side sections (4, 4') there is arranged a traction element (16) that displaces the carrier (9, 10) in the upward direction when the side sections (4, 4') are folded in.

2. Discer according to Claim 1, **characterized in that** the traction element (16) is in the form of a cable.

## Revendications

1. Outil de travail du sol, réalisé sous forme d'outil à disques, qui est approprié pour la culture du sol, l'outil à disques comprenant deux sections latérales (4, 4') disposées sur un châssis central (1) de manière articulée autour d'axes de pivotement orientés dans la direction de conduite, raccordées directement l'une à l'autre et comprenant des châssis porteurs, chaque section latérale comprenant sur le châssis porteur deux supports (9, 10) disposés l'un derrière l'autre et au moins approximativement parallèlement l'un à l'autre, s'étendant transversalement par rapport à la direction de déplacement de l'outil de travail du sol et pouvant coulisser l'un par rapport à l'autre, chaque support (9, 10) étant muni d'une pluralité de bras qui sont munis d'au moins un disque librement rotatif et placé de manière inclinée, chaque bras étant suspendu de manière élastique au support associé (9, 10), des disques correspondants étant disposés sur le premier et le deuxième support (9, 10) de telle sorte que les disques sur le premier support (9, 10) sont disposés de manière inclinée en sens inverse par rapport aux disques disposés sur le deuxième support (9, 10), au moins un élément pour le premier et/ou le deuxième support (9, 10) étant prévu, lequel élément est réalisé pour la fixation des supports (9, 10) essentiellement parallèles dans au moins une position de travail l'un par rapport à l'autre préalablement déterminée et/ou par rapport au châssis de l'outil de travail du sol, **caractérisé en ce qu'**un élément de traction (16) coulissant dans la direction vers le haut lorsque les sections latérales (4, 4') des supports (9, 10) sont repliées est disposé entre le châssis central (1) et au moins l'un des supports (9, 10) coulissants des sections latérales (4, 4').

2. Outil à disques selon la revendication 1, **caractérisé en ce que** l'élément de traction (16) est réalisé sous forme de câble.
